# EUROPEAN PATENT APPLICATION

(11) **EP 4 216 142 A1**
(43) Date of publication of application: **26.07.2023**
(21) Application number: 23153290.4
(22) Date of filing: 25.01.2023
(51) Int. Cl.: G06Q 40/00

(54) **METHOD FOR THE AUTOMATIC CONVERSION OF COMMERCIAL CREDITS INTO EQUIVALENT INSTRUMENTS SUITABLE TO PERFORM PAYMENTS OF MONETARY OBLIGATIONS**

(30) Priority: 25.01.2022 IT 202200001196
(71) Applicant: Cassano, Maurizio, 20123 Milano (IT); Innocenti Roberto Maria, 20141 Milano (IT)
(72) Inventor: Cassano, Maurizio, 20123 Milano (IT); Innocenti Roberto Maria, 20141 Milano (IT)
(74) Representative: Mazzitelli, Maria

(57) **Abstract**

A method is described for the automatic management of commercial credits aimed at the use of the same in equivalent instruments suitable for satisfying monetary obligations, using a server (3) on the Internet network, equipped with a central system (4) consisting of a software (12) for data management and for managing a central mechanism for the assignment of credits and for the offsetting (6) of the same with debts, supported by i) appropriate financial guarantees, ii) certification (4) of debts, credits and guarantees iii) a data repository (5) including a database of (commercial and financial) transactions (7) and an accounting database (8), and comprising a single STM service subject (9) who ensures that all credits, debt collaterals and backing guarantees are certified; the server (3) being accessible to any authorized operator (1) (company, entity, financial institution, private party) so that the authorized operators (1) can:
• have transactions converge on said database (5) and settle through assignments of credit and/or offsets the monetary obligations related to the transactions carried out in the virtual markets (10),
• instruct said single STM service subject (9) to ensure that all receivables and payables connected with commercial transactions and all guarantees, granted by guarantors (11), are certified, in order for said service subject (9) to verify the execution of payments and the receipt of safe collections on the due date of receivables,
• consult the accounting database (8) fed by the movements, carried out in the Portal of the STM service subject (9) and by the financial guarantees obtained (11), in order to be able to select the most suitable settlement modes,
• give the Portal of the STM service subject (9) settlement orders for the monetary obligations emerging from the accounting database (8) through the use of the assignment of receivables, the use of guarantees and possible offsetting.

## Description

The present invention refers to a method for the real-time management of the assignment of receivables and of offsets of monetary obligations arising from business activities, the management method being implemented by means of a combination of appropriate contractual and technological solutions in the field of information technology and telecommunications.

In particular, the present invention refers to a system for the centralized governance of the pecuniary settlements, of commercial obligations supported by appropriate financial guarantees and contractual obligations, related to transactions concluded on sites of the Internet network and for the transmission of certificates of confirmation of the transactions and of the pecuniary outcome thereof in a synchronous (bidirectional) and asynchronous (one-way) manner.

### Background of the invention

Below, specific reference will be made to operators, it being understood that the term operators is intended to indicate any subject endowed with legal capacity and fiscal and banking coordinates such as, for example: the individual or collective, public or private enterprise, the financial intermediary, the body or the association or the foundation under public or private law, whether they are recognised or not, the selfemployed worker, the professional, the private individual.

Hereinafter, specific reference will be made to goods and services, it being understood that the term goods means tangible and intangible goods, and the term services means performances and promises of performances of any kind.

Hereinafter, reference will be made to monetary obligations, it being understood that the term refers to the monetary asset side connected to a contracting, i.e. the emerging credit right, and the collateral liability side, i.e. the monetary obligation of the debtor. Hereinafter, reference will be made to guarantees, it being understood that the term guarantee refers to a guarantee obtained by an operator in order to be able to take on a monetary obligation as a debtor; the same guarantee may also be the subject of an assignment to other operators operating in the virtual market. Hereinafter, reference will be made to Sell Take Market (STM), it being understood that the term STM means both the servicing entity, in charge of ensuring the settlement of the monetary obligations through the use of the assignment of receivables, of the use of collaterals and of possible offsets, and the virtual market, in which the transactions generating the centrally settled monetary obligations can also be carried out through the use of the STM service subject. It is understood, however, that the transactions may be carried out in any other market and settled with the use of STM, subject to the appropriate initial enabling obtainable by the individual operators concerned, or in a cumulative manner by the virtual markets wishing to use the monetary obligations offsetting service provided by STM. The method distinguishes itself from the operational declinations in the commercial sphere, taking up due its exclusiveness and novelty the composition of the activities, analytical processes and organisation of information.

In relation to the foregoing, the fact of having included the summary description of the operating processes of a virtual marketplace in the description schemes of the operating processes of the method has a predominantly explanatory purpose of the context in which the utility of the present invention is realised; the business activities generating monetary obligations can also be carried out outside STM in other platforms not included in STM, and at a later stage STM is accessed according to the invention to make use of the service of settling the monetary obligations

The mentioned result is obtained according to the teaching of the present description of the method for the simultaneous and sequential assignment of non-overdue commercial credits consisting of:
- software procedures implementing the functionality of the method,
- a support and host server for the database,
- connection with the Internet network in synchronous (two-way) and asynchronous (one-way) mode,
- automatically activated operational mechanisms of the functionalities of the method and suitable for realising those functionalities in a manner consistent with the rules envisaged.

The basic functionality of the method thus consists in the fulfilment of the monetary obligations through the sequential assignment of the commercial credits between operators belonging to STM, receivables generated as a result of business transactions occurred between operators again belonging to STM even if concluded on commercial platforms other than STM. Sequential assignment of commercial credit means the possibility for each STM operator to use (also in a fractional manner) the receivable received from a previous STM operator to fulfil the respective monetary obligation towards other STM operators.

### Summary of the invention

Aim of the present invention is to eliminate the drawbacks of the techniques currently in use by providing a method for the settlement of monetary obligations through the assignments of credits not yet collected and the possible offsets where the creditor is also a debtor of the same counterparty, which method is simple, straightforward and capable of limiting the traditional recourse to the instruments provided by the financial institutions. Institutions to which the invention, however, reserves the key role of guarantors, in the last resort, of the operators' solvency in view of the in-depth knowledge of the operators, their clients, and of the known expertise in the credit evaluation techniques.

Another aim of the present invention is to provide a new way of managing data, transactions, the emergence of debits and credits, payments, and contractually preestablished communications (certifying each operation and accounting data), which is fast and capable of carrying out the entire operational and certifying flow automatically, as well as limiting the amount of traditional documents handled and to be controlled.

Another aim of the present invention is to provide a new method for the settlement of the monetary obligations, which gives absolute certainty in the final outcome (payment of the debts when due) and is able to provide complete and accurate information.

Another aim of the present invention is to provide a new way of managing monetary obligations, which facilitates the use of electronic commerce platforms especially because of the significant advantages to be gained from the use of the centralized mechanism for the settlement of the obligations.

Another aim of the present invention is to provide such a method for the management of the monetary obligations that is versatile and capable of adapting to the dynamic evolutions of an enterprise operating in any market.

These purposes are achieved in accordance with the invention with the features listed in the appended independent claim 1.

Advantageous embodiments of the invention appear from the dependent claims.

The method for the centralized management of the settlement of the monetary obligations, according to the invention, uses a server on the Internet network and a service subject of reference called Sell Take Market (STM). This server comprises a central system equipped with data management software and a central mechanism for the assignment of credits and for offsetting debts and supported by special financial guarantees, certification of the same, and a data archive including a database of transactions (business and financial) and an accounting database. The function of the STM service subject is to implement the instructions given by the operators by certifying and recording all movements of the credit positions, collateral debts and supporting guarantees granted to the operators by regulated guarantors, by STM itself through a contracted insurance company.

The operators can connect to the server and carry out the operations for which they are authorized, according to a special access procedure: they can thus use the centralized mechanism for the assignment of the credits and the offsetting of debts to settle the monetary obligations related the operations performed. The operators, by virtue of the technological platform supporting the system, receive in real time the specific certification of all transactions carried out and related accounting movements originated from the activation of the monetary obligation settlement mechanism; the certification is generated by drawing on the transaction and accounting databases fed in real time.

The method for the centralized management of the settlement of the monetary obligations, according to the invention, necessarily takes place in a virtual marketplace, and allows to have transactions converge on said database and thus settle the monetary obligations related to the transactions in a contextual manner, by assigning to operators that are counterparties in STM (also in a fractional manner) the claims previously accrued with other operators in STM. It should be noted, however, that the method according to the invention can perform its typical functions also in relation to any market where the operators contracted with STM, decide to access said method in order to settle, through the assignment of credit, the monetary obligations related to the transactions carried out in the various markets which are not necessarily virtual.

The method for the centralized management of the settlement of the monetary obligations, according to the invention, guarantees that all monetary obligations will be successfully settled when due; for this purpose, all the subjects that are operators authorized to work in STM must be by regulation supported by a special guarantee, which ensures the successful settlement of the monetary obligations when due. In any case, a licensed operator who does not present guarantors is in any case authorized by STM to operate, as a buyer, on a respite basis, for an amount known as the "internal operating limit" evaluated during the enabling preliminary investigation and guaranteed by an insurance company.

### Brief description of the figures

Further features of the invention will become clearer from the detailed description that follows, referring to a purely illustrative and therefore non-limiting embodiment thereof, illustrated in the accompanying drawings, wherein:
Fig. 1 is a block diagram generically illustrating the general architecture of the method for the management of the settlement of the monetary obligations according to the invention;
Fig. 2 is a block diagram illustrating the architecture of the central system of the method for the management of the settlement of the monetary obligations according to the invention;
Fig. 3 is a flow chart illustrating the macro of the process for enabling to the central system of the method for the management of the settlement of the monetary obligations and the submission/acceptance of any collaterals according to the invention;
Fig. 4 is a flow chart illustrating the macro of the process of operations of the central system of the method for the management of the settlement of the monetary obligations according to the invention;
Fig. 5 is a flow chart illustrating the clearing and notification process macro of the central system of the method for the management of the settlement of the monetary obligations according to the invention;

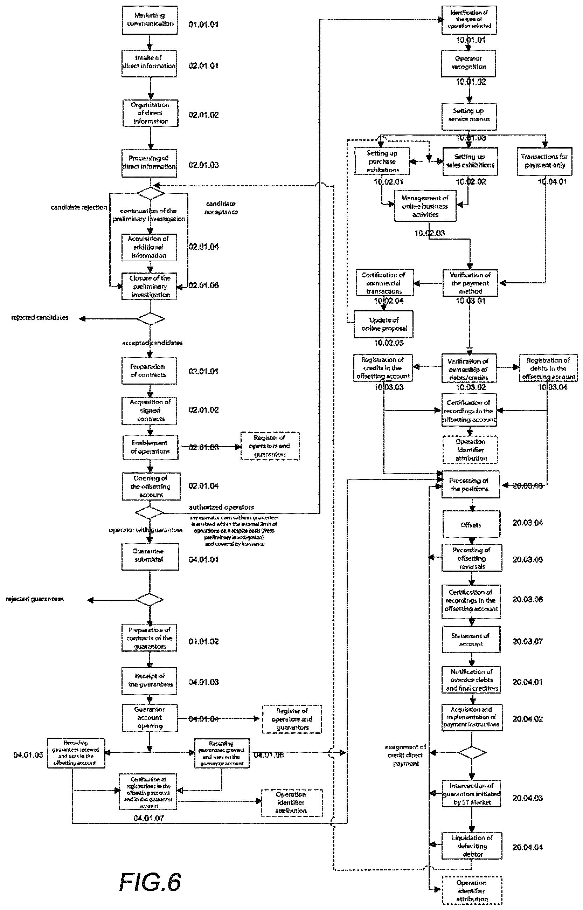

Fig. 6 is a flow chart illustrating the interaction between the enabling and guarantee process macro, the operation process macro and the clearing and notification process macro of the central system of the method for the management of pecuniary offsets according to the invention.

### Detailed description of the invention

With the aid of the figures and for simplicity reasons with reference to a virtual market, assumed to be inherent in one and the same service subject (also referred to as Sell Take Market, (STM)), the method for the real-time management of settlement of the monetary obligations related to transactions on electronic commerce platforms, according to the invention, is described.

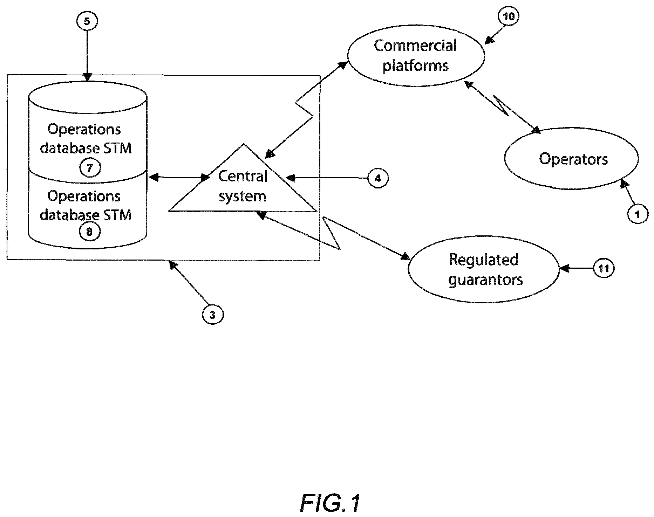

This management method makes use of technological means. With reference to Fig. 1, the management method is carried out through a server 3 on the internet network, to which operators 1 acting on commercial platforms 10 of electronic commerce and regulated guarantors 11 are connected through that network.

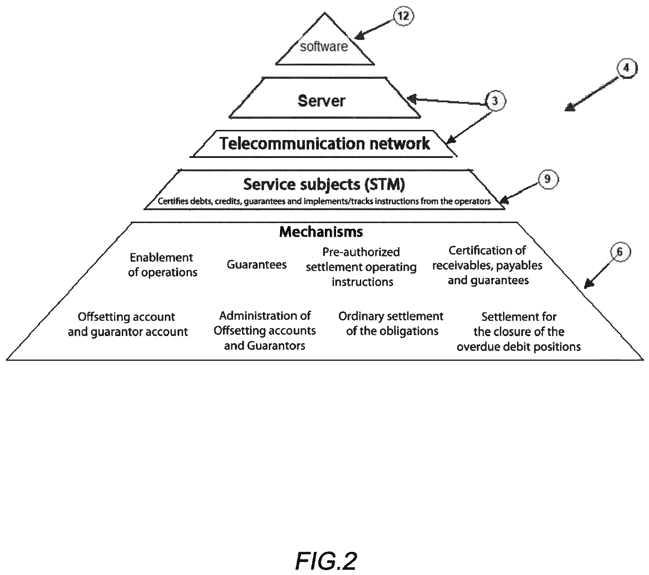

As also shown in Fig. 2, this server 3 is equipped with a central system 4 comprising software 12 for data management and management of a central settlement mechanism 6 for the monetary obligations, and with a database 5 comprising a database of transactions (business and financial) 7 and an accounting database 8. The central system 4 comprises a service subject called Sell Take Market (STM) 9 who certifies the monetary obligations related to the transactions and the guarantees granted and who records and certifies each of their movements as per instructions and ensures the fulfilment of the monetary obligations when due.

The server 3 is accessible to any authorized operator 1 (company, entity, financial institution, private individual) so that the authorized operators 1 can:
- have transactions converge on said database 5 and settle through the assignment of credits or offsets, where the conditions are met, the monetary obligations related to the transactions carried out in the commercial platforms 10,
- permit to a single service subject, said so-called STM 9, the settlement of the monetary obligations related to transactions and the use of the guarantees, granted by regulated guarantors (financial institutions recognised by the financial system)11, necessary to operate under conditions of performance safety,
- consult the accounting database 8 fed by the positions and movements, transferred and ordered to STM 9, of the monetary obligations related to the transactions and financial guarantees necessary to operate under conditions of performance safety,
- give STM 9 instructions for the movement of the monetary obligations related to the transactions and the guarantees necessary to operate the settlements, emerging from the accounting database 8.

Said system, according to the invention, supports the use of said technological means with appropriate procedural mechanisms. Said mechanisms integrate closely with said technological means and direct the use of said technological means to achieve the purposes of the system, according to the invention. Said procedural mechanisms, according to the invention, are specifically aimed at realising the effects listed below and at realising the basic rules of STM:
- non-monetary obligations and rights remain with the operators (delivery, collection of goods, performance, receipt of services) to be performed in a manner, at a time and place agreed in the contract;
- STM certifies and records obligations and pecuniary rights deriving from the activities of the contracting operators by tracking asynchronous and simultaneous communications between the contracting operators carried out through the applications made available by STM (the certification and recording mechanism may take place through a proprietary internal operating structure);
- STM certifies and records obligations and guarantee rights necessary to operate under conditions of performance safety by tracking asynchronous and simultaneous communications between the operators and the regulated guarantors carried out through the applications made available by STM (the certification and recording mechanism may take place through Certified E-Mail communications or equivalent systems).

- all the transactions, carried out by STM's operators, including those for the settlement of the monetary obligations and those for obtaining and usage of guarantees, are accounted for in a nominative account called the "offsetting account", while in a particular evidence account in the name of each regulated guarantor and called the "guarantor account" the guarantees granted and their usage are accounted for;
- all STM's certifications and recordings are solely of an accounting and nonfinancial nature,
- the accounting of the liquidity (guarantees obtained, outstanding receivables) as well as the commitments (guarantees used, outstanding payables) can be used by the operators in the performance of the respective operations in STM.
- STM at the due date of the obligations notifies the debtors of the lists of the final creditors, certifies the execution of the debtors' fulfilment instructions, collects receipts from the creditors, as well as verifies that any cases of non-performance are nevertheless executed and resolved at the due date, without intervening from a financial point of view, which is a matter solely for the activities of the individual operators and guarantors.

In the following, the processes governing the method for the management of settlement of the monetary obligations related, for simplicity of exposition, to transactions on electronic commerce platforms are described. Three main macros have been described, namely a macro of access to the system executing the method, a macro of operation to the system executing the method, and a clearing and notification macro of the system executing the method. Each macro has been divided into processes, the processes into sub-processes and the sub-processes into activities. Each activity is characterised by a description of the input variables, the tasks and the controls of the activity, the means used to perform the activity and the output variables.

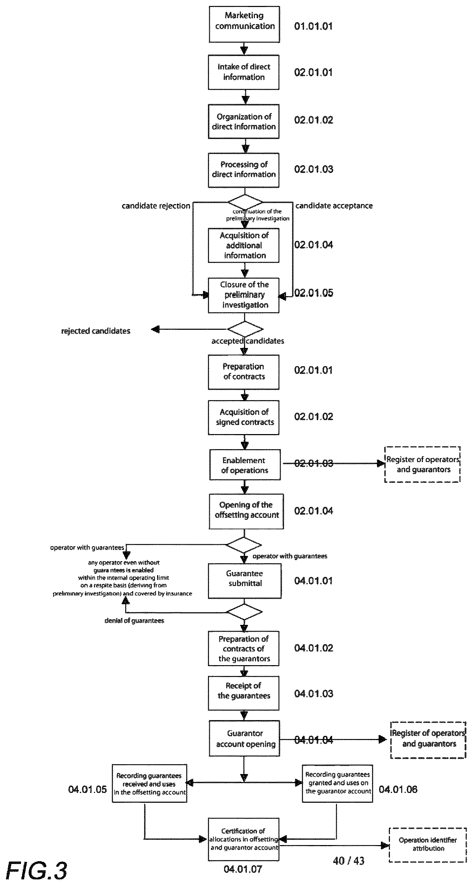

Below with reference to Fig. 3 and Table 1 the enabling process macro and Sell Take Market guarantees are described.

**[Table 1] Enabling macro and Sell Take Market guarantees**

| **Process:** | | **Promotion of the market access** |
|---|---|---|
| **Sub-process:** | | **Information marketing** |
| **Activity:** | | **01. 01. 01 - Marketing communication** |
| | Description: | Providing information to potential operators about the functioning of ST Market |
| | Input: | Marketing programme (decided in order to advertise and disseminate the use of ST Market), ST Market's operating regulations and contracts that can be entered into |
| | Tasks and controls: | Formulation of marketing communications and demos also via the network and entering into alliances with other virtual marketplaces (sites) from which ST Market's operational content can be used |
| | Means: | Persons capable of processing a marketing communication also on the net and able to re-process in a marketing key: a) the contracts with which the relationships deriving from the business and financial operations implemented with the intervention of ST Market are regulated, b) the operational regulations of ST Market. Persons capable of setting up alliances with marketplace providers to develop joint and co-branded communication initiatives for the development of ST Market operations. Site from which the ST Market itself can be accessed and through alliances with providers of other marketplaces. |
| | Output: | Adequate information to know the contents and the operational opportunities of ST Market also through the network |
| | | |

| **Process:** | | **Authorization to operate** |
|---|---|---|
| **Sub-process:** | | **Preliminary investigation** |
| **Activity:** | | **02. 01. 01 - Intake of direct information** |
| | Description: | Acquisition of news about operators wishing to join the ST Market's community of authorized operators |
| | Input: | Requests from the operators applying for access to the ST Market's community |
| | Tasks and controls: | Preparation and transmission of forms and questionnaires able to gather news about the candidates' operations, operational potentials, and reliability to operate commercially on a respite basis |
| | Means: | Persons with expertise in both the evaluation aspects in the business operations of enterprises and the identification of an overall picture of potential, business risk and due diligence elements under anti-money laundering legislation. Persons capable of preparing questionnaires even on the net with interactive modes and always under the constraint of privacy regulations. Procedures capable of transmitting the forms to the candidates. ST Market portal |
| | Output: | Appropriate and customized forms and questionnaires available for the candidates to be filled in also on the net |
| | | |

| **Process:** | | **Authorization to operate** |
|---|---|---|
| **Sub-process:** | | **Preliminary investigation** |
| **Activity:** | | **02. 01. 02 - Organisation of direct information** |
| | Description: | Examination and recording of the data contained in the questionnaires and forms filled in by the subjects wishing to join the community of authorized ST Market operators |
| | Input: | Appropriate and customized forms and questionnaires filled in by candidates, also on the net |
| | Tasks and controls: | Implementation of a "prospect" database where for each one the potential for commercial operations and solvency, the commercial risk, and the anti-money laundering risk under different profiles are summarised. |
| | Means: | Persons able to ensure the enrichment of a prospect database on the basis of questionnaires filled in by them also through the Portal. ST Market portal |
| | Output: | Candidate profile sheets with the declared data only |
| | | |

| | | |
|---|---|---|
| | | |

| **Process:** | | **Authorization to operate** |
|---|---|---|
| **Sub-process:** | | **Preliminary investigation** |
| **Activity:** | | **02. 01. 03 - Processing of direct information** |
| | Description: | Exploration of the news provided by subjects wishing to join the ST Market authorized operator community and evaluation whether it is appropriate to continue the preliminary investigation and on the information supplements |
| | Input: | Candidate profile sheets with the declared data only |
| | Tasks and controls: | Assessment of the operational prospects of the subjects under examination and of the risk connected with the grant/continuation to operate, decision as to whether or not to continue with the preliminary investigation with possible increases in the news to be gathered a) from official databases, b) directly from the subjects under examination or c) from subjects indicated by them. ST Market's own evaluation criteria |
| | Means: | Persons capable of evaluating a) the possibility of operating on a respite basis grantable to a business operator b) the operational potential that can be expressed in business terms. Scoring procedures and techniques. Supporting procedures. ST Market portal |
| | Output: | Profile sheets of the subjects under examination (1st update) [a) rejection of the subject under examination b) acceptance without information supplement c) continuation of the preliminary investigation with reQuest for information increase |
| | | |

| **Process:** | | **Authorization to operate** |
|---|---|---|
| **Sub-process:** | | **Preliminary investigation** |
| **Activity:** | | **02. 01. 04 - Acquisition of additional information** |
| | Description: | Acquisition of further news about the subjects wishing to join the ST Market's community of authorized operators |
| | Input: | Candidate profile sheets (1st update) |
| | Tasks and controls: | Assessment of the operational prospects that can be expressed by the subjects under examination and of the risk connected with the grant/continuation to operate, decision as to whether or not to continue with the preliminary investigation with possible increases in the news to be gathered from official databases, directly from the subjects under examination or from parties indicated by them |
| | Means: | Access to public databases and links with information providers authorized by the subject under examination. ST Market's own evaluation criteria. ST Market portal |
| | Output: | Candidate profile sheets (2nd update) |
| | | |

| **Process:** | | **Authorization to operate** |
|---|---|---|
| **Sub-process:** | | **Preliminary investigation** |
| **Activity:** | | **02. 01. 05 - Closure of the preliminary investigation** |
| | Description: | Define the level of riskiness of the subjects under examination as to the entry/permanence in ST Market and the conditions under which they can operate in it |
| | Input: | Candidate profile sheets (2nd update) profile sheets of the subjects under examination accepted without information supplement, profile sheets of the subjects under examination (1st update) rejected |
| | Tasks and controls: | Prediction of the operating prospects of the subjects under examination and of the operating risk, with definition of the conditions under which they will be able to operate on the market and to which ST Market will adhere until the news that contributed to defining the conditions themselves changes (e.g. assignment of an internal operating limit in the absence of guarantees); |
| | Means: | Persons capable of evaluating the risk of a business operator and the operational potential that can be expressed in commercial terms. Scoring procedures and techniques. ST Market's own evaluation criteria ST Market Portal |
| | Output: | Preliminary investigation outcome sheet (can be communicated to the subject under examination and binding ST Market), Final profile sheets of the subjects under examination, internal operating limit in the absence of guarantees |

| **Sub-process:** | | **Contracting** |
|---|---|---|
| **Activity:** | | **03. 01. 01 - Preparation of contracts** |
| | Description: | Preparation and transmission of the formal contracts of accession to ST Market |
| | Input: | Final Profile sheets of the subjects under examination, Preliminary investigation outcome sheet, |
| | Tasks and controls: | Transmission of pre-authorizing contracts and proposals, whereby those who pass the preliminary investigation will be able to operate in ST Market, pre-authorizing contracts and proposals suitable for receiving the willingness to accept the ST Market operating rules with markedly regard to both the formal recognition of the commercial credit by the debtor, and to the authorizations for the assignment of credits and reciprocal offsetting of credits with debts deriving from operations in ST Market, and the use of guarantees obtained for operations in ST Market only, as well as acceptance of specific pre-authorizations (e.g. offsetting and payment from a debtor current account, issuance of electronic invoices, etc.) |
| | Means: | Persons capable of drafting appropriate contracts to ensure the proper development of e-commerce transactions and the functioning of the operating, credit assignment, offsetting and fulfilment mechanisms provided to support ST Market also in a pre-authorized manner. Regulations and ST Market Portal. |

| | Output: | Texts of contracts and relative special clauses requiring express signature to be submitted to the counterparties for acceptance |
|---|---|---|
| | | |

| **Process:** | | **Authorization to operate** |
|---|---|---|
| **Sub-process:** | | **Contracting** |
| **Activity:** | | **03. 01. 02 - Acquisition of signed contracts** |
| | Description: | Verification that contracts have been signed by the subjects whose application for admission to ST Market is accepted |
| | Input: | Texts of contracts attestations and relative special clauses requiring express signature and signed by the counterparties |
| | Tasks and controls: | Ascertaining that the contracts and the relevant clauses have been signed |
| | Means: | Persons or procedures capable of performing customer care activities and of performing basic assistance and information activities for handling the formalization aspects of the contracts by the operators requesting access to ST Market. ST Market portal |
| | Output: | Signed contracts |
| | | |

| **Process:** | | **Authorization to operate** |
|---|---|---|
| **Sub-process:** | | **Contracting** |
| **Activity:** | | **03. 01. 03 - Enablement of operations** |
| | Description: | Notification of the authorization to proceed and of the dedicated certified e-mail address as well as the method by which recognition as an enabled operator can be obtained, entry of the accepting enabled party in the Register of the operators and guarantors |
| | Input: | Duly signed contracts |
| | Tasks and controls: | transmission to the operators concerned of the authorization to proceed and of personal ST Market access keys, of the dedicated certified e-mail address that can be activated through the personal keys. Implementation of the Register of the operators and guarantors |
| | Means: | Persons or procedures capable of performing customer care activities and of performing assistance activities in communication and for use of personal ST Market access keys, as well as persons enabled to update the Register of the operators and guarantors. ST Market portal |
| | Output: | credentials, dedicated certified e-mail address, updating of the Register of the operators and guarantors |

| **Sub-process:** | | **Offsetting account** |
|---|---|---|
| **Activity:** | | **3.01.04 - Opening of the offsetting account** |
| | Description: | Header of the offsetting account to the operators enabled to operate with settlement of the obligations through assignment of credits formally recognised by the debtors by means of a dedicated certified e-mail and by offsetting one's debts in ST Market with credits within said virtual market formed or recognised |
| | Input: | Signed contracts, credentials, dedicated certified e-mail |
| | Tasks and controls: | Opening of an online offsetting account intended to account for on a single account supervised and administered by ST Market: a) the settlements of the commercial transactions carried out in ST Market or externally to it b) the fees related to the commercial service delivery c) the outcomes of the settlement arrangements and of arrangement of credit, debit and collateral use positions in the offsetting account; d) fees and charges related to the management of the account and the settlement and arrangement services |
| | Means: | Persons suitable for maintaining procedures capable of managing the accounting of an offsetting account fed by transactions deriving from accounting/trading applications and from transactions coming from applications preordained for pure account arrangement by the operators. Persons suitable for providing help to the operators to formulate online instructions useful for conducting account arrangements. ST Market portal |
| | Output: | Offsetting account, account arrangement menu |
| | | |

| **Process:** | | **Guarantees** |
|---|---|---|
| **Sub-process:** | | **Guarantee evaluation** |
| **Activity:** | | **04. 01. 01 - Guarantee submittal** |
| | Description: | Evaluation of the operator's request to act in ST Market assuming an amount of debts net of credits, up to the amount of sums guaranteed by third parties that are enabled to grant by the regulated financial system or by subjects belonging to the tax system |
| | Input: | Requests made by menus with an indication of contracted guarantors, i.e. an indication of the regulated guarantors and contracts signed by the guarantor providing for their enforcement in the event of nonpayment by the guaranteed party on the notified due date |
| | Tasks and controls: | Verification of the acceptability of the request in relation to the quality of the guarantor; issuance of the acceptance judgement and operating instructions |
| | Means: | Persons endowed with appropriate procedures capable of carrying out activities to check the enforceability of the import of the guarantee as well as capable of carrying out assistance activity to the operators aimed at indicating the feasible form and the modalities by which the guarantees in support of operations can be made effective. ST Market portal |
| | Output: | Certificate of acceptance of the guarantee and operational information or rejection of the guarantees. Outcome sheet of the preliminary investigation on the guarantor and the guarantee |

| **Process:** | | **Authorization to operate** |
|---|---|---|
| **Sub-process:** | | **Contracting of guarantees** |
| **Activity:** | | **04. 01. 02 - Preparation of contracts of the guarantors** |
| | Description: | Preparation and sending to proposing operators and to the respective guarantors formal guarantee contracts to protect ST Market operations |
| | Input: | Certificate of acceptance of the guarantee, Outcome sheet of the preliminary investigation on the guarantor and the guarantee, |
| | Tasks and controls: | Preparation and transmission to the proposing operators and to the respective guarantors of contracts and attestations, under which the guarantors of the proposing parties will be able to give guarantees to operate in ST Market, contracts and attestations drawn up on suitable media to accept in an incontestable way the negotiating will to give guarantee and to express the acceptance of the general functioning rules of ST Market with particular regard to the commitment to activate (pay) also on request ST Market the guarantees granted to the proposing operator to operate on a respite basis in the virtual market. |
| | Means: | Persons capable of drafting contracts suitable for formalizing guarantees and ST Market rules for their use in view of the functioning of the fulfilment (payment) mechanisms envisaged in support of ST Market operations. ST Market regulations. ST Market portal |
| | Output: | Texts of contracts and relative special clauses requiring express signature to be submitted to the guarantor counterparties and proposing operators for acceptance |
| | | |

| **Process:** | | **Guarantees** |
|---|---|---|
| **Sub-process:** | | **Contracting of guarantees** |
| **Activity:** | | **04. 01. 03 - Receipt of the guarantees** |
| | Description: | Verification that the contracts have been signed by the subjects (operators and guarantors) with reference to which the request for admission of guarantees in ST Market is accepted and communication of the dedicated certified e-mail address to the guarantor |
| | Input: | Texts of contracts attestations and relative special clauses requiring express signature and signed by the counterparties proposing operators and guarantors |
| | Tasks and controls: | Ascertaining that the contracts and the relevant clauses have been signed |
| | Means: | Persons or procedures capable of performing customer care activities and of performing basic assistance and information activities for handling the formalization aspects of the contracts by the proposing operators and the granting guarantors. ST Market Regulation. ST Market portal |
| | Output: | Signed contracts, dedicated certified e-mail address of the guarantor |
| | | |

| **Process:** | | **Guarantees** |
|---|---|---|
| **Sub-process:** | | **Guarantor account** |
| **Activity:** | | **04.01.04 - Opening of guarantor account** |
| | Description: | Header of a special account called "guarantor account" in the name of the subject providing a guarantee to operators enabled to work in ST Market on a respite basis |
| | Input: | Signed contracts, dedicated certified e-mail address |
| | Tasks and controls: | Opening of an online (evidence) account destined to account for on a single account supervised and administered by ST Market, the guarantees that are granted to the operators to work in ST Market on a respite basis |
| | Means: | Persons suitable for maintaining procedures capable of accounting in an evidence account for the inputs and the outputs (uses) of guarantees authorized by ST Market, as well as enabled to update the Register of the operators and guarantors ST Market Regulation. ST Market portal |
| | Output: | Guarantor account, credentials to the guarantor for access in view of the account and for access in view of the offsetting account of only the operators guaranteed by that guarantor and relatively to the detail of the use of only the guarantees granted, updating of the Register of the operators and guarantors |
| | | |

| **Process:** | | **Guarantees** |
|---|---|---|
| **Sub-process:** | | **Accounting for guarantees** |
| **Activity:** | | **04.01.05 - Recording guarantees received and uses in the offsetting account** |
| | Description: | Recording, in the appropriate section of the offsetting account, of expendable collateral for ST Market operations |
| | Input: | Offsetting account, contracts signed by proposing operators and guarantors, intervention by the guarantors urged by the operators and/or by ST Market |
| | Tasks and controls: | Record in Credit of the operators' offsetting accounts the guarantees obtained, broken down by maturity, and in Debit the uses (guarantors' interventions) |
| | Means: | Procedures capable of automatically taking over in the offsetting account the accounting entries relating to the operators' collateral items receivable broken down by maturity and of the relative usage. ST Market portal |
| | Output: | Credit accounting entry line of the offsetting account in the guarantee section |

| **Activity:** | | **04.01.06 - Recording guarantees granted and uses on the guarantor account** |
|---|---|---|
| | Description: | Recording in the appropriate section of the guarantor account of the guarantor's commitments towards guaranteed subjects |
| | Input: | Guarantor account, accounting entries relative to the guarantors' commitments towards operators covered by the guarantee and to the relative uses |
| | Tasks and controls: | Record in Debit of the guarantor's accounts the commitments towards the operators, broken down by maturity and in Credit the uses |
| | Means: | Procedures capable of automatically taking over in the guarantor account the accounting entries relative to the movements of guarantees towards the operators. ST Market portal |
| | Output: | Debit/Credit accounting entry line of the guarantor account |

| **Process:** | | **Guarantees** |
|---|---|---|
| **Sub-process:** | | **Certification of the guarantees** |
| **Activity:** | | **04.01.07 - Certification of the entries in the offsetting account and in the guarantor account** |
| | Description: | Formalization and communication by certified e-mail of the entries in the offsetting account to the operators concerned and in the guarantor account to the guarantors concerned |
| | Input: | Debit accounting entry lines of the guarantor account, Credit accounting entry lines of the offsetting account, signed contracts |
| | Tasks and controls: | Preparation and transmission to the operators and guarantors concerned according to the contractual indications of the accounting records evidencing the entries in the offsetting account and in the guarantor account together with the references of the underlying transactions, allocation of the transaction identifier |
| | Means: | Procedures capable of automatically producing debit and credit records starting from the accounting lines recorded in the offsetting account and in the guarantor account, and showing the details of the transactions occurred, then procedures suitable for transmitting them to the media agreed upon in the contract and for assigning the transaction identifier. ST Market portal |
| Output: | | Debit/Credit records transmitted by certified e-mail, transaction identifier |

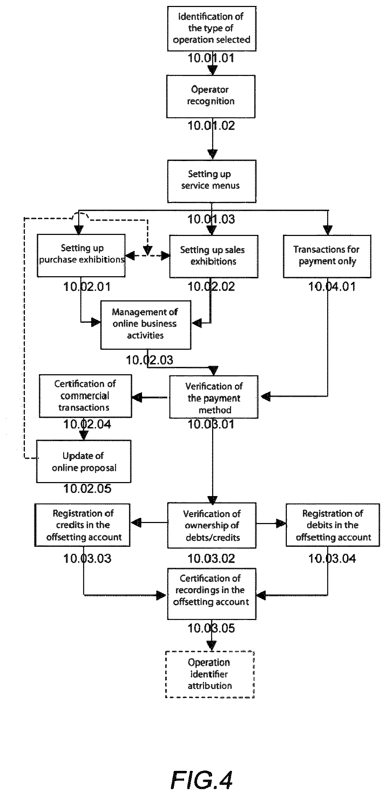

Below with reference to Fig. 4 and Table 2 the Sell Take Market operation process macro is described

**[Table 2] Sell take market operation macro**

| **Process:** | | **Access to market operations** |
|---|---|---|
| **Sub-process:** | | **Access to services** |
| **Activity:** | | **10.01.01 - Identification of the type of operation selected** |
| | Description: | Examination of the options selected by the operator aimed at setting up the applications capable of permitting the transactions |
| | Input: | Requests from operators accessing the ST Market |
| | Tasks and controls: | Online interpretation by means of appropriate procedures of the options formulated and setting up of online applications suitable for conducting transactions or provision of further possibilities of selections in menus of more articulated sets of transactions. Verification of the need to request recognition by showing credentials |
| | Means: | Persons suitable for maintaining procedures adapted to: i) interpret the requested transactions, ii) set up the applications capable of carrying them out and preparing them, iii) verify the need for showing credentials and acquire them. Persons suitable for providing help to the operators to formulate online instructions suitable for conducting the desired transactions. ST Market portal |
| | Output: | (Online information for the management of the transactions), request for recognition |

| **Activity:** | | **10.01.02 - Operator recognition** |
|---|---|---|
| | Description: | Recognize the operator in order to authorize the operations that expressly envisages showing credentials |
| | Input: | Request for recognition, credentials |
| | Tasks and controls: | Online control through special procedures of the enabling to operate |
| | Means: | Persons capable of maintaining procedures adapted to carry out accreditation checks on an ongoing basis and to provide help to the operators to access the process of recognition and for expanding the set of enabled transactions. ST Market portal |
| | Output: | Certificate of authorization to proceed in the transactions |
| | | |

| **Process:** | | **Access to market operations** |
|---|---|---|
| **Sub-process:** | | **Access to services** |
| **Activity:** | | **10.01.03 - Setting up service menus** |
| | Description: | Provision of special menus to allow the authorized operators to work in ST Market and to make applications in a customized manner for conducting transactions |
| | Input: | Certificate of authorization to proceed in the transactions, signed contracts |
| | Tasks and controls: | Configuration of menus to allow the operators to conduct transactions in a customized manner. |
| | Means: | Persons suitable for maintaining procedures capable of assembling menus of macro instructions to activate the transactions indicated by the operators. Persons adapted to provide help to the operators to configure the appropriate menus online. ST Market portal |
| | Output: | Customized online menus for the management of the transactions |
| | | |

| **Process:** | | **Performance of operations** |
|---|---|---|
| **Sub-process:** | | **Commercial service delivery modes** |
| **Activity:** | | **10.02.01 - Setting up sales exhibitions** |
| | Description: | Implementation of the options selected by the operators from the menus for the purpose of executing transactions in a sellers' position |
| | Input: | Customized online menus for the management of transactions, certificates authorizing the arrangement on the offsetting account |
| | Tasks and controls: | Online execution through appropriate procedures of the options formulated by the operators by making available the appropriate applications for conducting transactions (e.g.: sales windows, call for tenders and auctions, listing in continuous trading forms, etc.) |
| | Means: | Persons suitable for maintaining procedures capable of implementing the online offer design indicated by the operators. Persons capable of providing help to the operators to implement online instructions adapted to favour the conduction of the desired transactions. ST Market portal |
| | Output: | Sales "virtual exhibitions" |

| **Process:** | | **Performance of operations** |
|---|---|---|
| **Sub-process:** | | **Commercial service delivery modes** |
| **Activity:** | | **10.02.02 - Setting up purchase exhibitions** |
| | Description: | Implementation of the options selected by the operators from the menus for the purpose of carrying out transactions in a buyers' position |
| | Input: | Customized online menus for the management of the transactions, certificates authorizing the arrangement in the account |
| | Tasks and controls: | Online execution through appropriate procedures of the options formulated by the operators by making available online applications suitable for the configuration of the conduction of the transactions (e.g.: purchase showcases, call for tenders and auctions, listing in continuous trading forms, etc.) |
| | Means: | Persons suitable for maintaining procedures capable of implementing the online offer design indicated by the operators. Persons capable of providing help to the operators to implement online instructions adapted to favour the conduction of the desired transactions. ST Market portal |
| | Output: | Purchase "virtual exhibitions" |
| | | |

| **Process:** | | **Performance of operations** |
|---|---|---|
| **Sub-process:** | | **Obligation regulation** |
| **Activity:** | | **10.05.01 - Transactions for payment/collection only** |
| | Description: | Implementation of the options selected by the operators from the menus for the purpose of settling obligations arisen even outside the ST Market, but between subjects joining the same ST Market |
| | Input: | Customized online menus for managing settlement-only transactions, account balances and detail positions on an ongoing basis, for monitoring risk positions on an ongoing basis, for certified communication (certified e-mail) of commercial documents (e.g. electronic invoices) underlying the credit positions, for the recognition of credits and for acceptance of the assignment of the credit as fulfilment of monetary obligations |
| | Tasks and controls: | Setting up online through appropriate procedures of the options formulated by the operators by making available the online applications suitable for the configuration of the performance and for the identification and recognition through certified e-mail of the economic and commercial underlying from which the settlement transactions derive (e.g.: electronic invoices, open contracts, certification of tax credits, debt acknowledgement attestation, acceptance of credit assignment as payment, etc.). |
| | Means: | Persons endowed with appropriate procedures capable of carrying out activities to verify the presence of the requirements for the identification of the underlyings and the executability of the settlement, as well as capable of carrying out possible assistance activity to operators, aimed at indicating the feasible settlement form and possible integration of the requirements (e.g. integration of guarantees). ST Market portal. |
| | Output: | Settlement transactions pending execution authorization, files of identification and certification documents, trade statistics. |
| | | |

| **Sub-process:** | | **Commercial service delivery modes** |
|---|---|---|
| **Activity:** | | **10.02.03 - Management of online business activities** |
| | Description: | Receipt and comparison of the contract proposals formulated by the operators |
| | Input: | Sales and purchase "virtual exhibitions", spot adherence to the exhibited proposals |
| | Tasks and controls: | Automatic matching between purchase and sales proposals, and commercial monitoring |
| | Means: | Persons capable of managing procedures for governing and monitoring an online market and to follow all commercial transactions that take place in it and concluded with the exchange of a will between the contracting parties (proposal proposing and/or adhering operators). ST Market portal. |
| | Output: | Transactions pending settlement authorization, price lists, trade statistics. |
| | | |

| **Process:** | | **Performance of operations** |
|---|---|---|
| **Sub-process:** | | **Settlement of the transactions** |
| **Activity:** | | **10.03.01 - Verification of the payment method** |
| | Description: | Verification of the form of cash settlement of the transactions occurred in the trading section of ST Market, i.e. externally, but always between ST Market operators |
| | Inputs: | i) Commercial transactions pending settlement authorization and signed contracts, ii) settlement transactions (commercial transactions occurred outside the ST Market between operators adhering thereto) pending execution authorization, commercial documents (e.g. contracts, electronic invoices, reciprocal certified e-mails for debt acknowledgement, for proposal/acceptance of assignment of credits in payment, etc.), iii) ongoing risk positions |
| | Tasks and controls: | Verification of the compatibility of the transaction's cash settlement with the contractually agreed enabling to operate, and verification of the capacity of the operator's risk position; issuance of the verification opinion and any operating instructions |
| | Means: | Persons endowed with appropriate procedures capable of carrying out activities to check the contractual relevance of the cash settlement and to consult on risk positions, as well as capable of carrying out a possible assistance activity to the operators aimed at indicating the feasible payment form and the ways in which the guarantees in support of payments and offsets can be supplemented. ST Market portal. |
| | Output: | Final transactions verified by ST Market |
| | | |

| **Process:** | | **Performance of operations** |
|---|---|---|
| **Sub-process:** | | **Settlement of the transactions** |
| **Activity:** | | **10.03.02 - Credit/Debit holding verification** |
| | Description: | Verification of the ownership of debts and credits arising from the settlements related to the transactions operated in ST Market and relative accounting |
| | Input: | Final transactions, signed contracts |
| | Tasks and controls: | Verification of a ST Market operator's credit claim on other operators (belonging to the ST Market community) deriving from the settlements related to the payment transactions |
| | Means: | Procedures capable of contractually and accountancywise verifying the receivables due to the active subjects in the monetary obligations deriving from the commercial and/or settlement transactions and correlatively of verifying the debt owed to the passive subjects, i.e. of verifying the decrease in the receivable from the credit assignors. ST Market portal |
| | Output: | Contracts of assignment of credit, accounting entries relative to the numerical items of receivable/payable monetary obligations of the operators |
| | | |

| **Process:** | | **Performance of operations** |
|---|---|---|
| **Sub-process:** | | **Settlement of the transactions** |
| **Activity:** | | **10.03.03 - Recording of the credits in the offsetting account** |
| | Description: | Recording of the credits broken down by maturity, in the appropriate section of the ST Market offsetting account |
| | Input: | Offsetting account, accounting entries relative to the numerical entries of receivable monetary obligations of ST Market operators |
| | Tasks and controls: | Update in Credit of the operators' offsetting accounts the credit positions broken down by maturity |
| | Means: | Procedures capable of automatically taking over in the offsetting account the accounting entries relative to the receivable numerical items of the ST Market operators. ST Market portal |
| | Output: | Credit accounting entry line of the offsetting account |
| | | |

| **Process:** | | **Performance of operations** |
|---|---|---|
| **Sub-process:** | | **Settlement of the transactions** |
| **Activity:** | | **10.03.04 - Allocation of debits in the offsetting account** |
| | Description: | Recording of the debts broken down by maturity in the appropriate section of the ST Market offsetting account |
| | Input: | Offsetting account, accounting entries relative to the numerical entries of payable monetary obligations of ST Market operators |
| | Tasks and controls: | Update in Debit of the operators' offsetting accounts the debit positions broken down by maturity |
| | Means: | Procedures capable of automatically taking over in the offsetting account the accounting entries relative to the payable numerical items of the ST Market operators. ST Market portal |
| | Output: | Debit accounting entry line of the offsetting account |
| | | |

| **Process:** | | **Performance of operations** |
|---|---|---|
| **Sub-process:** | | **Settlement of the transactions** |
| **Activity:** | | **10.03.05 - Certification of the allocations in the offsetting account** |
| | Description: | Formalization and communication of the allocations in the offsetting account to the operators concerned |
| | Input: | Debit accounting entry lines of the offsetting account, Credit accounting entry lines of the offsetting account, signed contracts, final transactions |
| | Tasks and controls: | Preparation of records evidencing the allocations in the offsetting account and the references of the underlying transactions and transmission to the operators concerned according to the contractual instructions |
| | Means: | Procedures capable of automatically producing debit and credit records starting from the accounting lines recorded in the offsetting account, and showing the details of the transactions occurred, then procedures capable of transmitting them on the media agreed upon in the contract. ST Market portal |
| | Output: | Debit/Credit records transmitted |
| | | |

| **Process:** | | **Performance of operations** |
|---|---|---|
| **Sub-process:** | | **Commercial service delivery modes** |
| **Activity:** | | **10.02.04- Certification of transactions** |
| | Description: | Formalization and communication of the occurred transactions to the operators concerned |
| | Input: | Final transactions, signed contracts |
| | Tasks and controls: | Preparation and transmission to the operators concerned, according to the contractual indications, of certificates a) proving the occurred transactions that have obtained an authorized settlement b) expressly indicating the (active/passive) counterparty of the monetary obligations related to the final transactions c) containing the details of the transactions that can be used for civil and tax purposes and, where contractually provided for, that can be used for the issue of the electronic invoice by ST Market |
| | Means: | Procedures capable of automatically producing and sending certificates starting from the final transactions and thus having authorized settlement. ST Market portal |
| | Output: | final transaction certificates |
| | | |

| **Process:** | | **Performance of operations** |
|---|---|---|
| **Sub-process:** | | **Commercial service delivery modes** |
| **Activity:** | | **10.02.05 - Update of online proposal** |
| | Description: | Update the virtual exposures present in ST Market based on the final transactions |
| | Input: | Signed contracts, final transactions, virtual exposures (1) (2) |
| Tasks and controls: | | Exclude from the set of the commercial proposals displayed in ST Market those matched (in whole or in part), so as to ensure that one proposal corresponds to a total adherence or several partial adherences that altogether complete it |
| Means: | | Persons suitable for maintaining procedures capable of transferring the relative matched proposals into final transaction archives, simultaneously eliminating them from the virtual exposures, i.e. restoring them with a different proposal code (in the case of perennial proposals with no adherence limits, i.e. the case of residual proposals due to partial adherence to the original proposal) Persons capable of performing customer care activities in support of proposal restoration. ST Market portal |
| Output: | | Virtual exposures (1) (2) updated |

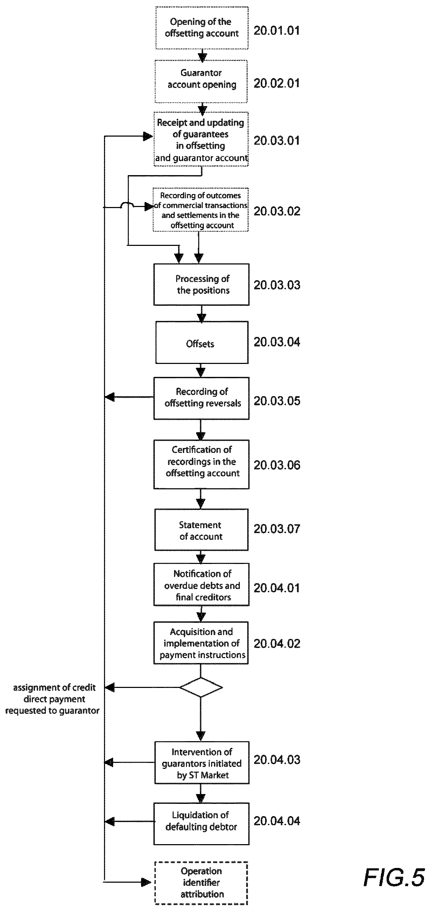

Below with reference to Fig. 5 and Table 3 the clearing process macro and Sell Take Market notifications are described

**[Table 3] Clearing macros and sell take market notifications**

| **Process:** | | **Settlement of the monetary obligations** |
|---|---|---|
| **Sub-process:** | | **Access to the service** |
| **Activity:** | | **20.01.01 - Opening of the offsetting account** |
| | Description: | Header of the offsetting account in the name of the operators authorized to operate with offsetting settlements |
| | Input: | Signed contracts, credentials |
| | Tasks and controls: | Opening of an online offsetting account intended to record: a) outcomes of the settlements of the commercial transactions carried out in or outside ST Market; b) the fees related to the commercial service delivery c) the outcomes of the settlement arrangements and of arrangement of credit, debit and collateral use positions in the offsetting account; d) fees and charges related to the administration of the account and the settlement and arrangement services. |
| | Means: | Persons suitable for maintaining procedures capable of administering an offsetting account fed by transactions deriving from accounting/trading applications and from transactions coming from applications preordained for payments. Persons suitable for providing help to the operators to formulate online instructions useful for conducting account arrangements. ST Market portal |
| | Output: | Offsetting account, account arrangement menu |
| | | |

| **Process:** | | **Settlement of the monetary obligations** |
|---|---|---|
| **Sub-process:** | | **Intervention of guarantors** |
| **Activity:** | | **20.02.01 - Opening of the guarantor account** |
| | Description: | Header of an account named "guarantor account" in the name of the person providing guarantee/credit to operators authorized to operate in ST Market on a respite basis |
| | Input: | Signed contracts |
| | Tasks and controls: | Opening of an online account designed to highlight the guarantees that are granted to the operators in order to work on a respite basis while waiting to obtain the payment of credits from other subjects authorized to carry out trade and settlement activities in the ST Market. Implementation of the Register of the operators and guarantors |
| | Means: | Persons suitable for maintaining procedures capable of accounting in an evidence account for the inputs and the outputs (uses) of guarantees authorized and certified by ST Market, as well as persons enabled to update the Register of the operators and guarantors ST Market Regulation. ST Market portal. |
| | Output: | Guarantor account, credentials of the guarantor for access in order to view the offsetting accounts of only the operators guaranteed by the guarantor and relatively only to the guarantees granted by the guarantor, master data update |

| **Process:** | | **Settlement of the monetary obligations** |
|---|---|---|
| **Sub-process:** | | **Offsetting and guarantor account administration** |
| **Activity:** | | **20.03.01 - Receipt and update of the guarantees (takeover of the activities of Registration and Certification of guarantees and the relative uses in the offsetting account and guarantor account)** |
| | Description: | Recording, in the appropriate sections of the offsetting account and in the guarantor account, of the guarantees (granted and of the uses) necessary for ST Market operations and relative certification notification to the parties concerned |
| | Input: | Offsetting account, guarantor account, contracts signed by proposing operators and guarantors, reporting the use of guarantees |
| | Tasks and controls: | Accounting broken down by maturity in: i) Credit of the operators' offsetting accounts the guarantees obtained, and ii) in Debit of the guarantors' accounts the commitments for guarantees granted, as well as accounting in the same accounts the uses of guarantees with the opposite sign, then notifying the movements to the counterparties concerned |
| | Means: | Procedures capable of automatically taking over by maturity in i) the offsetting account the accounting entries relating to the grants of guarantees in favour of the operators and the relative uses, ii) the guarantor account the accounting entries relating to guarantees granted and their movements. ST Market portal, certifying procedures and able of communicating the movements to the parties concerned |
| | Output: | Debit/Credit accounting entry lines of the guarantor account and the offsetting account, accounting messages to the parties concerned |
| | | |

| **Process:** | | **Settlement of the monetary obligations** |
|---|---|---|
| **Sub-process:** | | **Offsetting account administration** |
| **Activity:** | | **20.03.02 - Recording of outcomes of commercial transactions and settlements in the offsetting account (takeover of the activities Recording of receivables and payables in the offsetting account)** |
| | Description: | Recording of numerical movements deriving from trade and payment transactions in the appropriate section of the offsetting account |
| | Input: | Offsetting account, accounting entries relative to the numerical entries of receivable/payable monetary obligations of the operators in ST Market |
| | Tasks and controls: | Record the changes in payables and receivables of the subjects operating in ST Market in the offsetting accounts with evidence of the due dates |
| | Means: | Procedures capable of automatically taking over in the offsetting account the accounting entries relative to the numerical items related to the operators' debits and credits. ST Market portal |
| | Output: | Debit/Credit accounting entry line in the appropriate liquidity or due section. |
| | | |

| **Process:** | | **Settlement of the monetary obligations** |
|---|---|---|
| **Sub-process:** | | **Offsetting account administration** |
| **Activity:** | | **20.03.03- Processing of the positions** |
| | Description: | Maintenance of the offsetting account on an ongoing basis |
| | Input: | Offsetting account, accounting entry line Debit/Credit in the liquidity/due section, accounting entry line Debit/Credit in the collateral section |
| | Tasks and controls: | Computation in the different sections of the balances in the different maturities and of the overall risk position as well as results emerging from items with opposite sign and of similar maturity for the reciprocally debtor and creditor operators that could be susceptible to offsets to be authorized or pre-authorized. |
| | Means: | Persons suitable for maintaining procedures able of instantly processing all the positions and balances emerging from all the accounting records made. ST Market portal |
| | Output: | Detail balances and positions on an ongoing basis, risk positions on an ongoing basis in ST Market |
| | | |

| **Process:** | | **Settlement of the monetary obligations** |
|---|---|---|
| **Sub-process:** | | **Offsetting account administration** |
| **Activity:** | | **20.03.04 - Offsets** |
| | Description: | Notification of possible offsets to the operators that are in a condition to be eligible and collection of certified and reciprocal authorizations, or notification of offsets occurred as a result of contractually pre-authorized automatisms |
| | Input: | Detail balances and positions on an ongoing basis, signed contracts |
| | Tasks and controls: | Carrying out the offsetting in the account between entries with opposite sign or with analogous maturity for reciprocally debtor and creditor operators, after notifying the operators concerned and collection of the reciprocal authorizations if the offsets have not been pre-authorized |
| | Means: | Persons suitable for maintaining procedures capable, where the offsets are not pre-authorized, of identifying possible offsets, of notifying the counterparties concerned, and collecting the reciprocal authorizations in a certified manner. ST Market portal. |
| | Output: | Authorized and pre-authorized offsets and list of the reversals to be made in the offsetting accounts |
| | | |

| **Process:** | | **Settlement of the monetary obligations** |
|---|---|---|
| **Sub-process:** | | **Offsetting account administration** |
| **Activity:** | | **20.03.05 - Recording of offsetting reversals** |
| | Description: | Recording of offsetting reversals in Debit/Credit, in the appropriate section of the offsetting account |
| | Input: | Offsetting account, Authorized and pre-authorized offsets and list of the referrals to be made in the offsetting accounts |
| | Tasks and controls: | Update in Debit/Credit, of the operators' offsetting accounts the debit and credit position with the offsetting reversals |
| | Means: | Procedures capable of automatically taking over in the offsetting account the accounting entries relative to the reversals of receivable and payable numerical items between ST Market operators. ST Market portal |
| | Output: | Accounting entry lines of reversals in Debit and Credit of the offsetting accounts |
| | | |

| **Process:** | | **Settlement of the monetary obligations** |
|---|---|---|
| **Sub-process:** | | **Offsetting account administration** |
| **Activity:** | | **20.03.06 - Recording certification of reversals in offsetting account** |
| | Description: | Formalization and communication of the allocations in the offsetting account to the operators concerned |
| | Input: | Debit accounting entry lines of the offsetting account, Credit accounting entry lines of the offsetting account, signed contracts, final transactions |
| | Tasks and controls: | Preparation of records evidencing the allocations in the offsetting account and the references of the underlying transactions and transmission to the operators concerned according to the contractual instructions |
| | Means: | Procedures capable of automatically producing debit and credit records starting from the accounting lines recorded in the offsetting account, and showing the details of the transactions occurred, then procedures capable of transmitting them on the media agreed upon in the contract. ST Market portal |
| | Output: | Debit/Credit records transmitted |
| | | |

| **Process:** | | **Settlement being offset** |
|---|---|---|
| **Sub-process:** | | **Offsetting account administration** |
| **Activity:** | | **20.03.07 - Statement of account** |
| | Description: | Processing of the offsetting account statement |
| | Input: | Offsetting account, Debit/Credit accounting entry lines broken down by maturity, Debit/Credit accounting entry lines in the guarantee section |
| | Tasks and controls: | Evidence of the offsets in the account between entries with opposite sign or with analogous maturity for reciprocally debtor and creditor operators. Evidence of due and overdue items. And residual guarantees. Position computation. Computation and accounting of costs and revenues (discounts/premiums) related to settlement services and transaction management. |
| | Means: | Persons suitable for maintaining procedures capable of processing in the offsetting account sections all positions and balances emerging from all accounting records occurred during the reporting period, and of calculating and accounting for operating expenses, charges and income. ST Market portal |
| | Output: | Detail balances and positions as at the date, risk positions as at the date, Debit/Credit accounting entry line as a result of expenses, charges and income being calculated |
| | | |

| **Process:** | | **Settlement of the monetary obligations** |
|---|---|---|
| **Sub-process:** | | **Closure of overdue debit positions** |
| **Activity: creditors** | | **20.04.01 - Notification of overdue debts and final** |
| | Description: | Formalization and communication to the overdue debtors of the list of the final creditors and the amounts to be paid to each of them |
| | Input: | Balances and detail nominative positions as at the date (balances of overdue debts net of the offsets and relative detail positions towards the individual names of the final creditors and resulting as such after the sequence of assignments of credits) |
| | Tasks and controls: | Preparation for each overdue debtor of a list of creditors to be satisfied, with separate indication of those offset or to be offset and those whose payment has been pre-authorized, accompanied by the IBANs to be credited, preparation of menus with which each overdue debtor can activate the settlement methods chosen to fulfil vis-à-vis the individual creditors (direct bank transfer, request for intervention of the guarantor, assignment of credits, offset, etc.) if he has not pre-authorized the automatic payment (pre-authorized debiting of his current account) |
| | Means: | Procedures capable of analysing the sequence of the assignments of credits starting from the accounting lines recorded in the offsetting account, and capable of identifying the final creditors and notifying them to the debtor past due with evidence of those offset or to be offset and those with pre-authorized payment, hence procedures enabling the debtor to activate the chosen form of payment for each creditor still to be satisfied. ST Market portal |
| | Output: | List of the creditors and relative amounts, menu for selecting the forms of settlement, pre-authorized payments |
| | | |

| **Process:** | | **Settlement of the monetary obligations** |
|---|---|---|
| **Sub-process:** | | **Closure of overdue debit positions** |
| **Activity:** | | **20.04.02 - Acquisition and implementation of payment instructions** |
| | Description: | Acquisition and implementation of the payment instructions given via menus by the overdue debtors and recording of the instructions executed in the offsetting account and in the guarantor account when the latter intervenes |
| | Input: | List of the creditors and relative amounts, menu instructions for selecting the forms of settlement, pre-authorized payments offsetting account, guarantor account |
| | Tasks and controls: | Acquisition of the instructions and their implementation and/or control of the implementation of the fulfilments if these take place without the use of the ST Market procedures (e.g. direct payment or request for the use of guarantees if not pre-authorized) as well as accounting for them |
| | Means: | Procedures capable of operationalising payment instructions that are carried out through ST Market procedures, i.e. of controlling the discharge of debts operated outside such procedures (e.g. urging notices of receipt issued by the settled creditors), then accounting for the outcomes in the offsetting account and in the guarantor account. ST Market portal |
| | Output: | Outcomes of the payment instructions, execution of debtor-initiated payments, accounting records of the outcomes in offsetting account and guarantor account |
| | | |

| **Process:** | | **Settlement of the monetary obligations** |
|---|---|---|
| **Sub-process:** | | **Closure of overdue debit positions** |
| **Activity:** | | **20.04.03 - Intervention of guarantors initiated by ST Market** |
| | Description: | Notification of guarantors of the overdue debt positions to be remedied, control and accounting for the payment in the offsetting account and recording in the same account and in the guarantor account of the uses of guarantees |
| | Input: | Outcomes of the payment instructions, execution of debtor-initiated payments, contracts signed with debtors and guarantors |
| | Tasks and controls: | Preparation of the appropriate documentation to promote the substitution of the guarantor for the debtor for the obligation or for the unfulfilled portion when due and control of the guarantor's intervention to cover overdue debts. Recording in the offsetting account (of the substituted debtor and of the settled creditor) of the guarantor's performance and recording in the guarantor account and in the offsetting account of the uses of guarantees |
| | Means: | Procedures capable of: i) reproducing all contractual provisions signed by the guarantors and by the debtor, ii) notifying the guarantor of the request for intervention formally accompanied by the underlying reasons, iii) controlling the performance of the guarantor's intervention (e.g. notices of receipt urged to settled creditors), iv) accounting for the performances of the guarantor in the counterparties' offsetting accounts and in the guarantor account as well as for the use of guarantees in the substituted debtor's and the guarantor's offsetting accounts. ST Market portal |
| | Output: | Outcome of the guarantors' intervention, accounting entry lines in the offsetting accounts of the debtor, the discharged creditor and the intervened guarantor account |
| | | |

| **Process:** | | **Settlement of the monetary obligations** |
|---|---|---|
| **Sub-process:** | | **Closure of overdue debit positions** |
| **Activity:** | | **20.04.04 - Liquidation of defaulting debtor** |
| | Description: | Intervention of ST Market's insurance (internal guarantor) in place of the defaulting debtor and preparation of the documentation necessary to initiate enforcement actions against the debtor, initiation of preliminary investigation for the review of the defaulting operator's ST Market qualification and registration in the creditor's offsetting account of the payment made by the insurance |
| | Input: | Outcome of the payment instructions, Outcome of the intervention of the guarantors |
| | Tasks and controls: | Preparation of the documentation suitable to promote the substitution of the defaulting debtor of the ST Market's insurance and to initiate the subsequent enforcement action by the substitute, registration of the substitute's payment in the offsetting account (of the substituted debtor and of the settled creditor) and initiation of the preliminary investigation to review the defaulting operator's qualification. |
| | Means: | Procedures capable of: i) reproducing all contractual provisions signed by the defaulting debtor, ii) preparing the documentary dossier to be transmitted to the subject designated by the successor insurance company for the recovery of the claim, iii) accounting for the payment by the insurance in the counterparties' offsetting accounts, |
| | | iv) reporting to the "enabling and guarantees" process the commencement of the preliminary investigation to review the defaulting debtor's qualification. ST Market portal |
| Output: | | Dossier for the recovery of the non-performing claim by the payment subrecipient, notification of the start of the review preliminary investigation to operate in ST Market, accounting entry of the payment in the offsetting account. |

With reference to the processes and the activities listed above, the method for the centralized management of the monetary obligations, according to the invention, is based on certain typical procedural and contractual mechanisms:
- Enablement of operations (02.01.01, 02.01.02, 02.01.03, 02.01.04, 02.01.05, 03.01.01, 03.01.02, 03.01.03);
- Pre-authorized settlement operating instructions (03.01.01, 03.01.02)
- Ordinary settlement of the obligations (03.01.03, 04.01.04, 10.04.01, 10.03.01, 20.03.04);
- Guarantees (02.01.05, 04.01.01, 04.01.02, 04.01.03, 04.01.04, 04.01.05, 04.01.06);
- Certification of receivables payables guarantees and transactions (04.01.07, 10.03.02, 10.03.05, 20.03.06)
- Settlement for the closure of the overdue debit positions (20.04.01, 20.04.02, 20.04.03, 20.04.04, 20.04.07)
- Administration of the offsetting account and of the guarantor account (03.01.04, 04.01.04, 04.01.05, 04.01.06, 04.01.07, 20.03.03, 20.02.05, 20.03.07, 10.03.03, 10.03.04).

The mechanism of the enablement of operations in STM, according to the invention, requires STM to perform certain activities of a preliminary nature. STM acquires news about the operators wishing to join the virtual community, evaluates the trading and entrepreneurial potentials of these operators, as well as the level of riskiness, establishes the conditions under which these operators will be able to operate in the market according to the STM's rules, authorizes them to operate and formalizes the contractual relations between STM and these operators. Under this mechanism, according to the invention, an "internal operating limit" amount insured against insolvency is set following the preliminary investigation.

The mechanism of pre-authorized settlement operating instructions envisages that numerous activities supporting the operations in STM are previously authorized in order for them to take place automatically, insofar as they have a predictable outcome already at the time when the operators sign the contracts; by way of example (nonexhaustive) the following can be subject to pre-authorization i) the offsetting of credits with debts past due or with similar maturity, ii) the a priori acceptance by the debtor of the assignment of the credit claimed against him to another operator, iii) the acknowledgement of the debt through a command from the STM menu that activates a certified e-mail message which contains the acknowledgement deed, iv) issuance by STM of an electronic invoice on behalf of the operator who uses the STM Portal to carry out commercial transactions, v) the payment of debts on the due date with the use of the personal current account, vi) etc...

The mechanism of ordinary settlement of the obligations, according to the invention, comprises two main mechanisms
- Assignment of credit rights (also in a fractional manner)
- Offsetting of debts and credits

According to the invention, the mechanism for the assignment of credit rights is based on the following definitions:
- creditor contracting party - an operator who, as a result of a trade negotiation carried out in STM, has a claim against another operator (debtor contracting party);
- debtor contracting party - an operator who, as a result of a negotiation carried out in STM, finds himself a debtor vis-à-vis another operator (creditor contracting party).

The functioning of the mechanism of ordinary settlement of the obligations, according to the invention, focuses on the assignment of the credit rights (10.03.01, 10.04.01) and provides that the creditor contracting party, once the credit is communicated and certified to the debtor through the STM and acknowledged as such by the debtor, may assign, through the STM, all or part of his credit right to his other creditors. Thus, the debtor contracting party (assigned), as a result of the assignment of the credit right by the creditor contracting party in favour of other creditor contracting parties of the latter, becomes the debtor of the creditors (assignees) of the creditor contracting party (assignor).

From an accounting standpoint, STM: i) accounts (credits) for the assigned receivable in specific offsetting accounts (10.03.03, 03.01.04), in the assignee creditors' names, ii) highlights in a specific offsetting account (10.03.04, 03.01.04), in the debtor's name, the debtor's debt to the new creditors (assignees), iii) accounts (debits) the assigning creditor's offsetting account for the assigned credit. Upon maturity of the debt, the debtor who settles the debt (either through STM or in a manner triggered by STM in the event of default) will have the amount of the discharged debt entered (credited) into his offsetting account.

The functioning of the mechanism of ordinary settlement of the obligations, according to the invention, among the modalities of discharge of the debts, also provides that when the operators who are simultaneously debtors towards another STM operator may pre-authorize STM upon activation of the offsetting mechanism (e.g. where mutual debts and credits have similar due dates) or said operators may subject the activation of the offsetting mechanism through STM to a spot agreement with the other operator (where, for example, the due dates of the debit and credit items are temporally distant) (20.03.04)

The guarantee mechanism, according to the invention, provides that all operators, enabled to work in STM, are by rule supported by a special guarantee and in any case by an "internal operating limit" amount defined during the preliminary investigation and insured by a special insurance contract against insolvencies and all this in order to ensure that all credit rights are successful when due. As a consequence of this general principle, according to the invention, all credits are supported by collateral and thus have a certain outcome for the creditor operators; since said credit rights are supported by collaterals, they implicitly increase the creditor contractor's "collateral pool", who will be able to carry out further commercial transactions by benefiting from such additional collateral derived from other operators.

The risk-free functioning of the well-known mechanism of assignment of the credit rights (20.02.02) is therefore, according to the invention, further secured by the functioning of the guarantee mechanism consisting of both guarantees granted by regulated guarantors and the specially secured "internal operating limit"; as a result of said mechanism, indeed all assigned credits can be considered assigned without recourse and used by the assignee creditors for further settlement transactions in STM.

The mechanism for certifying credits, debts and guarantees according to the invention envisages that all economic entities of any STM contracts, credits, debts, guarantees, settlements, transactions, authorizations and each movement of the same is certified through certified e-mail communications in such a way as to guarantee that, in addition to the tracking ensured by the STM's technological apparatus (based on blockchain), each piece of information can be found in other legally recognised and reliable systems; this has the dual purpose of limiting cyber risks and making the production of the documents underlying each transaction readily available at all times, especially to protect client operators and to comply with the rules that require the use of certified communications for certain legal transactions (30.01.03, 30.01.04, 10.02.04, 10.03.05, 20.03.06)

The settlement mechanism for closing out overdue debit positions according to the invention is intended to be supplementary to the ordinary settlement mechanism in order to allow debts to be discharged when due. Upon the due date of the credit, the debtor is notified by a special notification (20.04.01) containing the amounts to be paid to the final creditors and as a result of this list the debtor may decide between the ordinary settlement modalities (10.04.01, 10.03.01, 20.03.04), i.e. between the modalities described below referring to an exemplary embodiment and therefore not limiting the adoption of further options:
- direct payment of the debtor, in which case STM will receive a receipt from the settled creditors (20.04.02)
- pre-authorized debiting of the debtor's account (03.01.01, 03.01.02)
- request for intervention by the guarantor initiated by the debtor (20.04.02)
- request for intervention by the guarantor initiated by STM in the presence of inertia on the part of the debtor (20.04.03)
- debtor's enforcement initiated by the insurance company taking over the performance of the declared defaulting debtor (20.04.03)

According to the invention, the mechanisms for ordinary settlement and closure of overdue debit positions are based on the following definitions:
- OFFSETTING ACCOUNT - is a particular correspondence account between an operator and all other operators acting in STM (including guarantors for the guarantee section only) divided into three sections:
- guarantees section,
- past-due section,
- due section.

The guarantees section includes (by way of example):
- in CREDIT the guarantees obtained broken down by maturity ("internal operating limit" specifically secured and guarantees obtained from third parties authorized to grant them in STM),
- in DEBIT the guarantees used broken down by maturity (intervention of guarantors).

The overdue section includes (by way of example):
- in CREDIT: the overdue credits from other debtor operators, fee income and premiums, balancing debit balance of the overdue section,
- in DEBIT: the overdue debts to other creditors, fee expenses and charges, the balancing credit balance of the overdue section.

The due section includes (by way of example):
- in CREDIT: the maturing credits from other operators (deriving from commercial transactions with other operators, and from assignments of credits received as assignee and evidence of the debtor names),
- in DEBIT the maturing debts to other operators (deriving from commercial transactions with other operators and update on an ongoing basis with assignments of credits as assigned debtor and evidence of creditor names),

And wherein for all sections:
- CREDIT: means liquidity in the offsetting account,
- DEBIT: means commitments in an offsetting account.
- RISK POSITION - sum of the liquidity and the commitments of all sections of the offsetting account that can be interpreted as follows:
- liquidity > commitments - the account can be committed to further expenditure in STM,
- liquidity < = commitments - the account cannot be committed to further expenditure in STM.
- GUARANTOR ACCOUNT - is a particular evidence account between a guarantor and all other operators acting in the STM broken down in one single section:
- in CREDIT the guarantees used by each operator broken down by maturity (intervention of guarantors),
- in DEBIT the guarantees granted to each operator broken down by maturity.

According to the invention, the functioning of the mechanisms for ordinary settlement and for closing debt positions requires that each STM operator has a particular offsetting account (03.01.03), in which collateral, debts and credits, related to the commercial operations carried out in STM and those imported or generated in STM for cash settlement purposes, are accounted for. Through the management of said account, the offsetting (pre-authorized or spot-agreed) by algebraic sum of the DEBIT and CREDIT amounts of the past due and due sections takes place at any time (20.03.04). Through the ongoing management of said account, the risk position of the offsetting account is also measured and, where this is large, the operators are allowed (10.03.01) to spend (buy on a respite basis, pay) in STM the excess liquidity over the commitments of the offsetting account, thereby temporarily offsetting in a broad sense the liquidity and commitments recorded in ST MARKET.

The administration mechanism of the offsetting account, according to the invention, provides for the continuous updating of the accounting database with accounting movements (10.03.03, 10.03.04, 20.03.05, 20.04.02, 20.04.03, 20.04.04), and the continuous consultation of the account status (20.03.03) in all its sections by STM and by the operators; periodically, the statement of account (20.03.07) is produced with the computation of the management charges, fees and revenues. The operator holding said account can subject the contents of the sections themselves to contracting, which becomes negotiable in the virtual market. These trade proposals are received by STM using the typical mechanisms of the commercial transactions (10.02.01, 10.02.02, 10.02.03, 10.02.05), so that all account movements feed into the accounting database and generate a virtual certification with the traditional content of the analogous bank accounting document (10.03.05, 20.03.06). The certification is transmitted by appropriate means (e.g. certified e-mail) to the operators concerned.

The execution of the commercial transaction, involving the positions emerging from the offsetting account, can only have as counterparty an operator of the STM with whom the payer has made arrangements, or any operator of the STM that adheres to the proposals displayed in special virtual buy/sell windows.

The method for the centralized management of the monetary obligations, according to the invention, has several advantages.

This method makes it possible to improve the management of recurring and alternating temporary financial deficits of the operators, allowing operators to collect receivables on maturity net of possible offsets with counterparties to whom they are also debtors, and on the other hand to use, in order to operate in the virtual market, pecuniary (receivable) obligations that have not yet matured, which monetary obligations, being by regulation supported by a specific guarantee obtained upstream from the debtor operator, constitute, in turn, "guarantees" that can be used by the creditor operator of the guaranteed debtor.

Another advantage of the method, according to the invention, is the reduction of the reliance on financial institutions for the management of temporally staggered receipts and payments, which will be managed through the standard mechanism of the assignment of credits in payment of debts and with possible pre-authorized or spot offsets with counterparties to whom one is also a debtor (10.03.01, 10.03.02, 10.03.03, 10.03.04, 10.03.05, 20.03.04, 20.04.02, 20.04.03, 20.04.04, 20.03.03, 20.03.05).

Said advantage has significant benefits for the operators, first and foremost the possibility of being able to cope with any temporary liquidity deficit by agreeing with the creditors on the payment through the assignments of soon-to-be due credits, and not also the cost of the risks of insolvency of monetary obligations, risks that are nonexistent in STM, due to the rule that requires each monetary obligation to be preliminarily covered by a collateral and/or an amount called the secured "internal operating limit" (03.01.03, 04.01.03, 04.01.07).

Said advantage generates a fundamental utility for all operators, represented by the possibility of being able to use, at zero cost, the same guarantee obtained from another operator, for subsequent operations in STM carried out in sequence by several operators; in fact, the STM centralized settlement process implicitly transfers to the operators who are creditors of a guaranteed monetary obligation, the guarantee previously obtained, by STM rule, from the debtor operator in order to be able to take a monetary obligation in STM. A further utility that can be used by the operators is represented by the adoption of a single method for the settlement of the monetary obligation and by the consequent contraction of the organisational and accounting costs implied by adapting to the numerous methods of settlement of the receipts and payments of the transactions traditionally provided by the financial institutions.

Another advantage of the method, according to the invention, resides in the real-time visibility of the accounting situation emerging from the accounting movements implied by the centralized settlement mechanism to which all the obligations of the operators related to the transactions carried out in STM converge (20.03.03).

According to the invention, the method for the centralized management of the ordinary settlement of the monetary obligations guarantees the convergence in real time into a single accounting database of all certified monetary obligations related to the transactions carried out in the virtual market and the guarantees provided for by STM rule. In equally real time, each feed to this database is certified by said method with special documents addressed to the operators concerned (04.01.07, 20.03.06, 10.03.05), giving rise to the existence of a dual tracking system, the one consisting of STM's technological apparatus and the other of the universal system of the certified electronic mail or equivalent systems.

A further advantage inherent in the method lies in the overall view of the accounting situation of the operators and the chain of the operations by STM, whose continuous verification activity makes it possible both to prevent all those operations that violate the rules set up to defend the successful outcome of the monetary obligations (20.04.01, 20.04.04, 10.03.01, 20.04.03), and to ensure and enforce the fulfilment of the obligations of debtors past due towards creditors to be satisfied.

This method enables operators to have, at any time, an exact picture of their own situation (20.03.03) of guarantees, past due receivables and payables, and payment status, and of due receivables and payables, and thus also enables each operator to be able to take action to optimise this situation by carrying out further transactions of a commercial nature and arrangement of their rights evidenced by this database (10.02.01, 10.02.02).

The method for the centralized management of the monetary obligations, according to the invention, specifically provides for the operators to work in a virtual marketplace where the transactions between operators are made "sequential" and immediate with the intervention of STM to ensure continuous and tracked monitoring, compliance with the functioning rules, the performance of the monetary obligations when due even in the case of inert or manifestly defaulting debtors (20.04.03, 20.04.04). Numerous variations and modifications of detail within the scope of the invention as expressed by the appended claims may be made to the present embodiment of the invention.

## Claims

1. A method for the centralized processing of monetary obligations related to transactions in any market including electronic commerce platforms, using a server (3) on the internet network, to which operators (1) acting on virtual markets (10) of electronic commerce and any other regulated market and guarantors (11) are connected through said network; said server (3) comprising a central system (4), including in turn software (12) for data management and management of a central mechanism for processing (6) monetary obligations, as well as a database (5) including a database of commercial and financial operations (7) and an accounting database (8), said central system (4) corresponding to a single STM service subject (9) which ensures the certification of monetary obligations and financial guarantees in support of operations, the server (3) being accessible to any licensed operator (1) and may be activated to perform said method which includes the following steps:
- to have transactions converge on said database (5) and settle through assignments of credit and/or offsets the monetary obligations related to the transactions carried out in the virtual markets (10),
- to instruct said single STM service subject (9) to ensure that all receivables and payables connected with commercial transactions and all guarantees, granted by regulated guarantors (11), are certified, in order for said service subject (9) to verify the execution of payments and the receipt of safe collections on the due date of receivables,
- to consult the accounting database (8) fed by the movements, carried out in the STM service subject (9) and by the guarantees obtained from regulated guarantors (11), in order to be able to select the most suitable settlement modes,
- to give the STM service subject (9) settlement orders for the monetary obligations emerging from the accounting database (8) through the use of the assignment of receivables, the use of guarantees and possible offsetting.

2. Method according to claim 1, **characterized in that** it comprises the following process macros:
- access to the STM subject (9) by an operator (1) who intends to operate in virtual markets (10) and settle monetary obligations, supported also by guarantees provided by regulated guarantors (11);
- operations by the STM service subject (9) which provides both the electronic trading service carried out by the operator (1) and the implementation tools for settling monetary obligations;
- clearing and notifications by the STM service subject (9), which verifies the fulfillment of overdue monetary obligations through monetary obligation offsets and by implementing operator instructions.

3. Method according to claim 2, **characterized in that** said access macro comprises:
- the process of authorization to operate in virtual markets (10) and settlement of monetary obligations, authorization conferred by the STM service subject (9) to the operator (1);
- the process of authorization to operate in virtual markets (10) and settlement of monetary obligations, also with the support of regulated guarantors (11), authorization given by the STM service subject (9) to the operator (1) who requests it.

4. Method according to claim 3, **characterized in that** said process of authorization to operate comprises the following sub-processes:
- preliminary investigation in which the STM service subject (9) acquires news about the operators (1) wishing to operate in the virtual markets and settle monetary obligations,
- contracting, in which the STM service subject (9) prepares contracts with operators (1) wishing to operate in the virtual market (10) and settles monetary obligations,
- header of the offsetting account in the name of each authorized operator (1).

5. Method according to claim 4, **characterized in that** said sub-process of investigation comprises the following activities:
- intake of direct information regarding the operator (1) by the STM service subject (9),
- collection of said direct information by the STM service subject (9),
- processing of said information collected by the STM service subject (9),
- acquisition of additional information regarding the operator (1) by the STM service subject (9),
- closure of the preliminary investigation phase.

6. Method according to claim 4 or 5, **characterized in that** said contracting subprocess comprises the following activities:
- preparation of contracts by the STM (9) service subject, through which the operator (1) adheres to the STM (9) service subject for the activity of electronic commerce in virtual markets (10) and to regulate monetary obligations,
- acquisition of the contracts signed by the operator, by the STM service subject (9),
- enablement of operations in which the STM service subject (9) enables operators who have signed contracts to act in the virtual market according to the rules of the STM service subject (9).

7. Method according to claim 4, 5, 6 **characterized in that** said offsetting account header subprocess comprises the following activity:
- opening for each authorized operator (1) of an accounting instrument (offsetting account) deputed to receive the numerical and collateral variations related to operations in the virtual markets.

8. Method according to claim 6, **characterized in that** said process of authorizing to operate in virtual markets (10) and settling monetary obligations with the support of regulated guarantors (11), comprises the following subprocesses:
- evaluation of guarantees submitted by operators (1)
- contracting of guarantees in which the STM service subject (9) prepares contracts with operators (1) who intend to operate in the virtual market with the support of regulated guarantors (11),
- header of the guarantor account to each regulated guarantor (11) whose guarantees are verified by the STM service subject (9),
- accounting of guarantees offered by authorized regulated guarantors (11),
- certification of guarantees accounted for.

9. Method according to claim 8, **characterized in that** said sub-process of evaluating guarantees (11) submitted by operators (1) comprises the following activity:
- submission of guarantees (11) offered by operators (1) in support of operations to be submitted for evaluation/verification by the STM service subject (9).

10. Method according to claim 4, 8 and 9, **characterized in that** said sub-process of contracting the guarantees presented by the operators (1) comprises the following activities:
- preparation of contracts by the STM service subject (9), through which regulated guarantors (11) provide operators (1) with guarantees for the activity of electronic commerce in virtual markets,
- acquisition of the contracts signed by the operators (1) and the regulated guarantors, by the STM service subject (9).

11. Method according to claim 4 ,8, 9 and 10, **characterized in that** said guarantor account header subprocess comprises the following activity:
- opening for each regulated guarantor (1), whose guarantee is authorized by the STM service subject (9), of an accounting instrument (guarantor account) deputed to accommodate changes in guarantees related to the operations of the operators (1) in the virtual markets.

12. A method according to any one of claims 8 to 11, **characterized in that** said subprocess for accounting for guarantees submitted by operators (1) comprises the following activities:
- recording in the offsetting account of the guarantees verified by the STM service subject (9) and received by the operators (1) and of the related uses that may be realized in the course of the operators' operations (1) in the virtual market,
- registration in the account of the guarantor of the guarantees verified by the STM service subject (9) and received by operators (1) and of the relative uses that may be made during operators' operations (1) in the virtual market.

13. Method according to any one of claims 8 to 12, **characterized in that** said subprocess of certifying guarantees submitted by operators (1) comprises the following activity:
- certification of accounting records relating to guarantee movements and uses, formalized and transmitted to the relevant operators (1) and their respective regulated guarantors (11).

14. Method according to any one of claims 2 to 13, **characterized in that** said operation macro comprises the following processes:
- access to operations in the virtual market, in which the operator (1) can start operations,
- performance of operations, in which the operators (1) carry out the transactions of purchase and/or sale in the virtual market (10), settlement of bonds and the STM service subject (9) ensures compliance with the service rules in the transactions of the operators (1).

15. Method according to claim 14, **characterized in that** said process of accessing market operations comprises a subprocess of accessing services comprising the following activities:
- identification of the type of operation selected by the operator (1),
- recognition of the operator by the STM service subject (9), by means of access keys and credentials,
- setting up of a menu of services by the STM service subject (9), through which operators (1) can select operations in the virtual market.

16. Method according to claim 14 or 15, **characterized in that** said process of conducting transactions comprises the following sub-processes:
- method of providing trading services,
- settlement of transactions,
- settlement of monetary obligations.

17. Method according to claim 16, **characterized in that** said sub-process of commercial service delivery mode comprises the following activities:
- setting up of sales exposures, in which the operator (1) carries out transactions in the position of a seller,
- setting up of purchase exposures, in which the operator (1) carries out transactions in the position of buyer,
- management of online commercial activities in which the STM service subject (9) receives and compares the contractual proposals formulated by the operators,
- certification of commercial transactions,
- updating of online proposals aimed at recomposing purchase/sale windows.

18. Method according to claim 16 or 17, **characterized in that** said transaction settlement sub-process comprises the following activities:
- verification of the form of payment and settlement of obligations,
- verification of the ownership of debts and credits, which in the course of operations in virtual markets (10) and settlement of obligations, are formed in the hands of operators (1),
- registration of credits in the offsetting account,
- registration of debits in said offsetting account,
- certification of the entries made in said offsetting account.

19. Method according to any one of claims 14 to 18, **characterized in that** said monetary obligation settlement sub-process comprises the following activity:
- transactions of only payment/collection imported into the STM service subject (9) by traders (1) and originated in any market.

20. Method according to any one of claims 2 to 19, **characterized in that** said offsetting and notifications macro comprise a process for settling monetary obligations comprising in turn the following sub-processes:
- administration of said offsetting account by STM (9),
- closure of overdue debit positions.

21. Method according to claim 20, **characterized in that** said subprocess of administering said offsetting account comprises the following activities:
- processing of positions on an ongoing basis to evaluate the overall risk position of the operators (1) and the detailed debit/credit position with respect to other named operators (1),
- offsetting of the reciprocal debit/credit positions of the operators (1) emerging from the processing of the positions,
- recording of transfers deriving from offsetting operations,
- certification of registrations in the offsetting account of reversals for spot and/or pre-authorized offsets by operators,
- statement of account of the offsetting account.

22. Method according to claim 20 or 21, **characterized in that** said sub-process of closing overdue debit positions comprises the following activities:
- notification to operators (1) of overdue debts and final creditors with which the STM service subject (9) invites them to close all overdue debit positions,
- acquisition and implementation of payment instructions by the STM service subject (9),
- intervention by regulated guarantors (11) at the initiative of the STM service subject (9) in cases of insufficient instructions from operators (1),
- enforcement of defaulting debtors (1) and review of authorization.
